# EUROPÄISCHE PATENTSCHRIFT

(11) **EP 1 353 430 B1**
(45) Veröffentlichungstag und Bekanntmachung des Hinweises auf die Patenterteilung: **06.04.2016**
(21) Anmeldenummer: 03007496.7
(22) Anmeldetag: 07.04.2003
(51) Int. Cl.: H02J 9/00

(54) **Schaltungsanordnung**
Circuit arrangement
Disposition de circuit

(30) Priorität: 11.04.2002 DE 20205636 U
(43) Veröffentlichungstag der Anmeldung: 15.10.2003
(73) Patentinhaber: Eaton Safety IP GmbH & Co. KG, 12529 Schönefeld (DE)
(72) Erfinder: Vornweg, Dietmar, 48163 Münster (DE)
(74) Vertreter: Grünecker Patent- und Rechtsanwälte PartG mbB

(56) Entgegenhaltungen:
- EP-A- 0 690 542
- DE-C1- 4 422 991
- US-A- 3 714 452

## Beschreibung

Die Erfindung betrifft eine Schaltungsanordnung mit wenigstens einem mit Schutzerdung versehenen elektrischen Verbraucher und einer Stromkreisumschalteinrichtung, mittels welcher der elektrische Verbraucher zur Stromkreisumschaltung mit Versorgungsanschlüssen zumindest zweier Spannungsnetze wahlweise verbindbar ist und mit wenigstens zwei Stromunterbrechungseinrichtungen, welche bei Auftreten eines Kurzschlusses ansprechen.

Eine solche Schaltungsanordnung ist aus der Praxis bekannt und dient dazu, bei Ausfall eines ersten Spannungsnetzes den elektrischen Verbraucher weiterhin zu versorgen, indem auf ein zweites Spannungsnetz umgeschaltet wird. Der Ausfall des ersten Spannungsnetzes kann beispielsweise dadurch erfolgen, dass ein Erdschluss während der Versorgung des elektrischen Verbrauchers auftritt. Ein solcher Erdschluss führt zu einem Ansprechen zumindest einer Stromunterbrechungseinrichtung.

Bei der aus der Praxis bekannten Schaltungsanordnung hat sich als nachteilig herausgestellt, dass bei Auftreten eines solchen Erdschlusses und Ansprechen der entsprechenden Stromunterbrechungseinrichtung keine Versorgung durch das zweite Spannungsnetz mehr möglich ist. Dies liegt daran, dass die Stromunterbrechungseinrichtung in einer gemeinsamen Verbindung des elektrischen Verbrauchers zu den beiden Spannungsnetzen verschaltet ist.

Bei einer solchen Anordnung der Stromunterbrechungseinrichtung ist zwar ein Umschalten auf das zweite Spannungsnetz im Falle eines externen Ausfalls des ersten Spannungsnetzes möglich, allerdings muss beispielsweise bei Ausbildung der Stromunterbrechungseinrichtung als Sicherung, diese erst in ihren Verbindungszustand zurückgesetzt oder bei einer Schmelzsicherung gegen eine andere ausgetauscht werden.

Aus EP 0690542 A1 ist eine Fehlerdetektion bei einer redundanten Spannungsversorgung bekannt. Ein Schaltkreis weist eine Anzahl von Leitungen auf, die mit unabhängigen Spannungsversorgungen gekoppelt sind. Zwei Verbindungen teilen Sie jeweils einen Rückkehrpfad. Eine Steuereinheit ist mit einer ersten Leitung verbunden, die eine erste Sicherung aufweist. Weiter-hin erfolgt eine Verbindung zu einer zweiten Leitung mit einer zweiten Sicherung. Es sind eine Anzahl von elektronischen Bauteilen vorgesehen, die für einen ersten Testschaltkreis und einen zweiten Testschaltkreis analog vorhanden sind.

DE 44 22 991 C1 beschreibt eine Schaltung mit einer Anzahl von Spannungsversorgungen. Diese sind aus Redundanzgründen vorgesehen und jeweils mit einer entsprechenden Anzahl von Anschlüssen verbindbar. Außerdem sind eine Anzahl von Sicherungen vorgesehen, die direkt entsprechenden Schaltern zugeordnet sind.

Der Erfindung liegt daher die Aufgabe zugrunde, bei Auftreten eines Erdschlusses zwar für eine ordnungsgemässe Stromunterbrechung zu sorgen, allerdings gleichzeitig eine Versorgung durch das zweite Spannungsnetz noch zu ermöglichen.

Diese Aufgabe wird durch die Merkmale des Anspruchs 1 gelöst.

Tritt jetzt bei Versorgung des elektrischen Verbrauchers durch das erste Spannungsnetz ein Kurzschluss auf, spricht die zwischen dem ersten Spannungsnetz und der Stromkreisumschalteinrichtung angeordnete Stromunterbrechungseinrichtung an, so dass die Sicherheit der Schaltungsanordnung gewährleistet ist. Wird die Stromkreisumschalteinrichtung allerdings anschliessend betätigt, ist eine Versorgung durch das zweite Spannungsnetz möglich. Erst wenn nochmals ein Erd- oder Kurzschluss während der Versorgung durch das zweite Spannungsnetz auftritt, wird auch die weitere Stromunterbrechungseinrichtung ansprechen und die Spannungsversorgung unterbrechen.

Durch die verblüffend einfache andere Anordnung der Stromunterbrechungseinrichtungen im Vergleich zum aus der Praxis bekannten Stand der Technik, ergeben sich nicht nur die vorangehend geschilderten Vorteile. Es ist weiterhin als vorteilhaft zu betrachten, dass durch diese alternative Anordnung der Stromunterbrechungseinrichtungen auch die Stromkreisumschalteinrichtung gegen einen evtl. auftretenden Fehler (Kurz-/Erdschluss) abgesichert ist.

Spannungsnetze und insbesondere Niederspannungsnetze sind nach entsprechender DIN-Norm in bestimmter Weise definiert. So gibt es beispielsweise TN-, TT- und IT-Netze. Der jeweils erste Buchstabe dieser Netzformen betrifft das Erdungsverhältnis der Stromquelle, wobei T für eine direkte Erdung der Stromquelle (Betriebserde) und I für eine Isolierung aller aktiven Teile gegenüber Erde oder Verbindung eines aktiven Teils mit Erde über eine Impedanz steht. Der jeweils zweite Buchstabe gibt das Erdüngsverhältnis von Körpern in elektrischen Verbraucheranlagen an, wobei T angibt, dass der Körper direkt geerdet ist, unabhängig von der gegebenenfalls bestehenden Erdung der Stromquelle, und N angibt, dass der Körper direkt mit dem Betriebserder (Erdung der Stromquelle) verbunde ist.

Um solche genormten Netze zusammen mit der erfindungsgemässen Schaltungsanordnung zu verwenden, sind die beiden Spannungsnetze ein TN-Netz und ein IT-Netz.

Um unabhängig von dem TN-Netz insbesondere durch eine Zentralversorgung den elektrischen Verbraucher weiter versorgen zu können, ist das IT-Netz ein Batterie- oder Akkumulatornetzsys-tem. Dieses Batterie- oder Akkumulatornetzsystem wie auch das IT-Netz selbst, weisen einen dem TN-Netz vergleichbaren Spannungspegel auf, um bei Ausfall des TN-Netzes den elektrischen Verbraucher entsprechend versorgen zu können.

Das TN-Netz ist das öffentliche Stromnetz.

Um die Schutzerdung des elektrischen Verbrauchers in einfacher Weise durchführen zu können, kann diese zur Vermeidung von Berührungsspannungen als Erdung eines entsprechenden Verbrauchergehäuses ausgeführt sein.

Um günstigerweise eine sichere und elektrische Betätigung der Stromkreisumschalteinrichtung zu ermöglichen, kann diese wenigstens eine Relais- oder Schutzbaugruppe aufweisen. Diese Baugruppen können sowohl bei Ausfall eines Netzes als auch bei Auftreten eines Kurzschlusses lokal oder auch zentral zum Umschalten gesteuert werden, um weiterhin die Versorgung des entsprechenden elektrischen Verbrauchers zu gewährleisten.

Eine einfache und sichere Möglichkeit zur Ausbildung der Stromunterbrechungseinrichtung kann darin gesehen werden, dass jede dieser Stromunterbrechungseinrichtung wenigstens eine Sicherung aufweist.

Bei einem Ausführungsbeispiel gemäss Erfindung kann jeweils eine Stromunterbrechungseinrichtung zwischen Stromkreisumschalteinrichtung und L-Versorgungsanschluss des TN-Netzes bzw. zwischen Stromkreisumschalteinrichtung und Plus-Versorgungsanschluss des IT-Netzes verschaltet sein.

Ergänzend besteht die Möglichkeit, eine weitere Stromunterbrechungseinrichtung zwischen Stromkreisumschalteinrichtung und Minus-Versorgungsanschluss des IT-Netzes zu verschalten.

Um für einen elektrischen Verbraucher oder auch eine Mehrzahl von elektrischen Verbrauchern eine entsprechende Schaltungsanordnung in einfacher Weise, beispielsweise bei einer Notstromversorgung oder dergl., vorsehen zu können, kann die Schaltungsanordnung als Modul ausgebildet sein, welches zwischen einer Mehrzahl von parallel zueinander verschalteten elektrischen Verbrauchern und den zwei Spannungsnetzen anordbar ist

Als konkrete Ausbildungen des elektrischen Verbrauchers sind unterschiedliche Beispiele möglich. Bei einem Notlichtsystem für Gebäude oder dergl. kann ein solcher elektrischer Verbraucher als Leuchte, insbesondere Notleuchte, Rettungszeichenleuchte oder dergl., ausgebildet sein.

Um insbesondere das TN-Netz einfacher aufzubauen, können N-Leiter und Schutzleiter des TN-Netzes als ein PEN-Leiter zusammengefasst sein. Über eine Verbindung mit diesem PEN-Leiter kann außerdem auch die Schutzerdung des oder der elektrischen Verbraucher erfolgen.

Im Folgenden wird ein vorteilhaftes Ausführungsbeispiel der Erfindung anhand der in der Zeichnung beigefügten Figuren näher erläuterten. Es zeigen
- Figur 1: eine Prinzipdarstellung einer aus der Praxis bekannten Schaltungsanordnung und
- Figur 2: ein erfindungsgemäßes Ausführungsbeispiel einer Schaltungsanordnung.

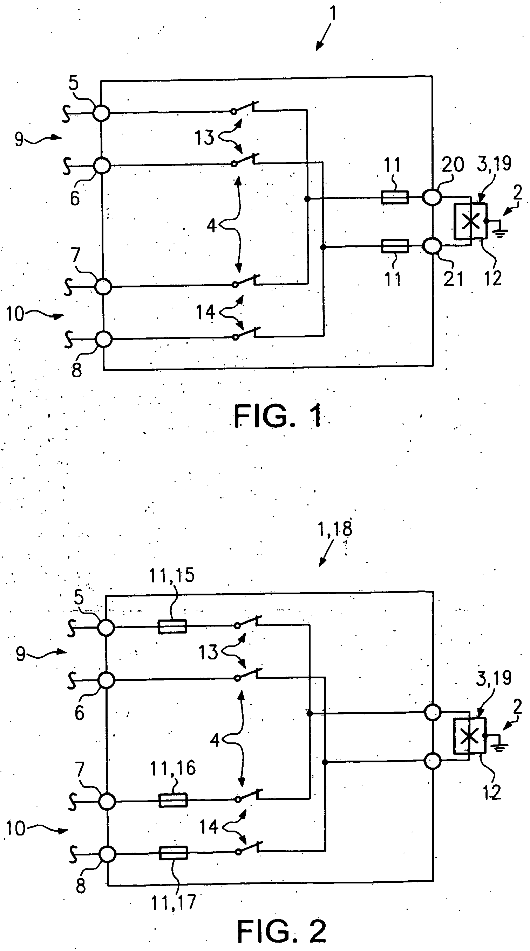

In Figur 1 ist eine Schaltungsanordnung 1 dargestellt, wie sie bisher in der Praxis insbesondere für Notlichtsysteme mit Zentralbatteriesystemen eingesetzt wird. Die Schaltungsanordnung 1 weist Versorgungsanschlüsse 5 und 6 für L-Leiter und N-Leiter eines TN-Spannungsnetzes 9 auf. Das TN-Spannungsnetz 9 ist das öffentliche Spannüngsnetz. Weiterhin weist die Schaltungsanordnung 1 Versorgungsanschlüsse 7 und 8 für Plus(+)- und Minus(-)-Pol eines Zentralbatteriesystems auf, das in Form eines IT-Spannungsnetzes 10 ausgebildet ist

Zur Verbindung d er entsprechenden Versorgungsanschlüsse 5, 6 und 7, 8 mit einem als Leuchte 19 ausgebildeten elektrischen Verbraucher 3 sind entsprechende Verbindungsleitungen zwischen den Versorgungsanschlüssen und Anschluss 20, 21 des elektrischen Verbrauchers ausgebildet. Diese Verbindungsleitungen sind so konfiguriert, dass mittels einer Stromkreisumschalteinrichtung 4 in Form von Relais-/Schutzbaugruppen 13, 14 wahlweise eine Versorgung durch das TN-Netz 9 oder das IT-Netz 10 möglich ist. In der in Figur 1 darges tellten Stellung der Stromkreisumschalteinrichtung 4 ist der elektrische Verbraucher 3 mit dem TN-Spannungsnetz 9 verbunden. Dagegen ist die Verbindung zum IT-Spannungsnetz 10 unterbrochen.

Zwischen den Anschlüssen 20, 21 des elektrischen Verbrauchers 3 und der Stromkreisumschalteinrichtung 4 sind in den Verbindungsleitungen innerhalb der Schaltungsanordnung 1 Stromunterbrechungseinrichtungen 11 in Form von zwei Sicherungen verschaltet. Eine dieser Sicherungen ist zwischen dem Anschluss 20 des elektrischen Verbrauchers 3 und dem L-Versorgungsanschluss 5 bzw. dem Plus-Versorgungsanschluss 7 angeordnet. Die andere Sicherung ist entsprechend zwischen dem NVersorgungsanschluss 6 und dem Minus-Versorgungsanschluss 8 angeordnet

Der elektrische Verbraucher 3 weist ein Verbrauchergehäuse 12 auf, das mittels Schutzerdung 2 geerdet ist. Die Schutzerdung kann in diesem Zusammenhang über einen PEN-Leiter des TN-Spannungsnetzes 9 erfolgen.

Spricht eine Sicherungen 11 nach Figur 1 an, ist jeweils die Verbindung des elektrischen Verbrauchers zu beiden Spannungsnetzeh 9, 10 unterbrochen. D.h.. falls bei Auftreten eines Erdschlusses zwischen L-Leiter des TN-Spannungsnetzes 9 and entsprechendem Schutzleiter eine Sicherung auslöst, ist auch bei Umschalten auf das IT-Spannungsnetz 10 zum Batteriebetrieb keine Versorgung des elektrischen Verbrauchers 3 mehr möglich.

Bei dem erfindungsgemäßen Ausführungsbeispiel der Schaltungsanordnung 1 nach Figur 2 ist dieser Mangel behoben. Gleiche Teile der Schaltungsanordnungen nach Figuren 1 und 2 sind durch gleiche Bezugszeichen gekennzeichnet, wobei im Folgenden nur auf die Unterschiede der Schaltungsanordnungen eingegangen wird.

Bei der Schaltungsanordnung 1 nach Figur 2 sind Sicherungen 15, 16, 17 als Stromunterbrechungseinrichtungen 11 jeweils zwischen Stromkreisumschalteinrichtung 4 und den Versorgungsanschlüssen 5, 7 und 8 bzw. Spannungsnetzen 9, 10 angeordnet. Die Schaltungsanordnung 1 kann als. Modul 18 ausgebildet sein, das zwischen einer Mehrzahl von parallel verschalteten Leuchten 19 als elektrischen Verbrauchern 3 und den entsprechenden Spannungsnetzen 9, 10 verschaltet ist.

Im Unterschied zu der Schaltungsanordnung 1 nach Figur 1 ist bei Ansprechen der Sicherung 15, d.h. bei dem im Zusammenhang mit Figur 1 beschriebenen Störfall, weiterhin ein Batteriebetrieb möglich durch Betätigen der Stromkreisumschalteinrichtung 4 möglich, da zwar die Sicherung 15 auslöst, aber die Sicherungen 16 und 17 nicht ausgelöst sind. Im Vergleich zur Figur 1 ist nur eine zusätzliche Sicherung notwendig, so dass die Schaltungsanordnung 1 nach Figur 2 mit geringem Kostenaufwand erhebliche Vorteile gegenüber der bekannten Schaltungsanordnung 1 nach Figur 1 aufweist. Als Vorteil ist in diesem Zusammenhang auch zu betrachten, dass bei der Schaltungsanordnung 1 nach Figur 2 ein evtl. auftretender Fehler (Kurzschluss) in der Stromkreisumschalteinrichtung 4 ebenfalls durch die entsprechende Sicherung 15, 16, 17 abgesichert ist. Eine entsprechende Absicherung ist bei der Schaltungsanordnung 1 nach Figur 1 nicht gegeben.

## Patentansprüche

1. Schaltungsanordnung (1) mit wenigstens einem mit Schutzerdung (2) versehenen elektrischen Verbraucher (3, 19) und einer Stromkreisumschalteinrichtung (4), mittels welcher der elektrische Verbraucher (3, 19) zur Stromkreisumschaltung mit Versorgungsanschlüssen (5, 6; 7, 8) zumindest zweier Spannungsnetze (9, 10) wahlweise verbindbar ist, und mit wenigstens zwei Stromunterbrechungseinrichtungen (11; 15, 16, 17), welche bei Auftreten eines Kurzschlusses ansprechen,
**dadurch gekennzeichnet, dass**
die Stromunterbrechungseinrichtungen (11; 15, 16, 17) zwischen Stromkreisumschalteinrichtung (4) und jeweiligem Spannungsnetz (9, 10) und insbesondere dessen Versorgungsanschlüssen (5, 6; 7, 8) angeordnet sind, welche
Spannungsnetze (9, 10) ein TN-Netz (9) und ein IT-Netz (10) sind, wobei
das IT-Netz (10) ein Batterie-oder Akkumulatornetzsystem und
das TN-Netz (9) das öffentliche Stromnetz ist.

2. Schaltungsanordnung Anspruch 1,
**dadurch gekennzeichnet, dass**
die Schutzerdung (2) des elektrischen Verbrauchers (3, 19) zur Vermeidung einer Berührungsspannung als Erdung des Verbrauchergehäuses (12) ausgeführt ist.

3. Schaltungsanordnung nach Anspruch 1 oder 2,
**dadurch gekennzeichnet, dass**
die Stromkreisumschalteinrichtung (4) wenigstens eine Relais- oder Schutzbaugruppe (13, 14) aufweist.

4. Schaltungsanordnung nach einem der vorangehenden Ansprüche,
**dadurch gekennzeichnet, dass**
jede Stromunterbrechungseinrichtung (11) wenigstens eine Sicherung (15, 16, 17) aufweist.

5. Schaltungsanordnung nach einem der vorangehenden Ansprüche,
**dadurch gekennzeichnet, dass**
jeweils eine Stromunterbrechungseinrichtung (11; 15, 16, 17) zwischen Stromkreisumschalteinrichtung (4; 13, 14) und L-Versorgungsanschluss (5) des TN-Netzes (9) bzw. zwischen Stromunterbrechungseinrichtung (11; 15, 16, 17) und Plus-Versorgungsanschluss (7) des IT-Netzes (10) verschaltet ist.

6. Schaltungsanordnung nach einem der vorangehenden Ansprüche,
**dadurch gekennzeichnet, dass**
eine weitere Stromunterbrechungseinrichtung (11, 17) zwischen Stromkreisumschalteinrichtung (4; 13, 14) und Minus-Versorgungsanschluss (8) des IT-Netzes (10) verschaltet ist.

7. Schaltungsanordnung nach einem der vorangehenden Ansprüche,
**dadurch gekennzeichnet, dass**
die Schaltungsanordnung (1) als Modul (18) ausgebildet ist, welches zwischen einer Mehrzahl von parallel verschalteten, elektrischen Verbrauchern (3) und den beiden Spannungsnetzen (9, 10) anordbar ist.

8. Schaltungsanordnung nach einem der vorangehenden Ansprüche,
**dadurch gekennzeichnet, dass**
der elektrische Verbraucher (3) als Leuchte (19), insbesondere Notleuchte, Rettungszeichenleuchte oder dergl., ausgebildet ist.

9. Schaltungsanordnung nach einem der vorangehenden Ansprüche,
**dadurch gekennzeichnet, dass**
N-Leiter und Schutzleiter des TN-Netzes (9) als ein PEN-Leiter ausgeführt sind.

## Claims

1. Circuit arrangement (1) with at least one electrical consumer (3, 19) provided with a protective earth (2) and, for the purpose of circuit switching, a circuit switching device (4) by means of which the electrical consumer (3, 19) can be selectively connected with supply connections (5, 6; 7, 8) of at least two supply networks (9, 10), and with at least two circuit breaker devices (11; 15, 16, 17) which are tripped on the occurrence of a short circuit, **characterised in that** the circuit breaker devices (11; 15, 16, 17) are arranged between the circuit switching device (4) and the respective supply network (9, 10) and in particular its supply connections (5, 6; 7, 8), said supply networks (9, 10) being a TN network (9) and an IT network (10), wherein the IT network (10) is a battery or accumulator network system and the TN network (9) is the public power supply network.

2. Circuit arrangement according to claim 1,
**characterised in that** in order to avoid a contact voltage the protective earth (2) of the electrical consumer (3, 19) is designed as a grounding of the consumer housing (12).

3. Circuit arrangement according to claim 1 or 2,
**characterised in that** the circuit switching device (4) has at least one relay or protection module (13, 14).

4. Circuit arrangement according to one of the preceding claims, **characterised in that** each circuit breaker device (11) has at least one fuse (15, 16, 17).

5. Circuit arrangement according to one of the preceding claims, **characterised in that** a circuit breaker device (11; 15, 16, 17) is in each case connected between the circuit switching device (4; 13, 14) and the L supply connection (5) of the TN network (9) or between the circuit breaker device (11; 15, 16, 17) and the plus supply connection (7) of the IT network (10).

6. Circuit arrangement according to one of the preceding claims, **characterised in that** a further circuit breaker device (11, 17) is connected between the circuit switching device (4; 13, 14) and the minus supply connection (8) of the IT network (10).

7. Circuit arrangement according to one of the preceding claims, **characterised in that** the circuit arrangement (1) is designed as a module (18) which can be arranged between a plurality of parallel-connected electrical consumers (3) and the two supply networks (9, 10).

8. Circuit arrangement according to one of the preceding claims, **characterised in that** the electrical consumer (3) is designed as a light (19), in particular an emergency light, escape route sign light or similar.

9. Circuit arrangement according to one of the preceding claims, **characterised in that** the N conductor and protective conductor of the TN network (9) are designed as a PEN conductor.

## Revendications

1. Dispositif de circuit (1) avec au moins un récepteur électrique (3, 19) pourvu d'une prise de terre (2) et un dispositif de commutation de courant (4) grâce auquel le récepteur électrique (3, 19) peut être connecté sélectivement au commutateur de circuit de courant via des connexions d'alimentation (5, 6 ; 7, 8) d'au moins deux réseaux électriques (9, 10), et avec au moins deux dispositifs de coupure de courant (11 ; 15, 16, 17) qui se déclenchent lors d'un court-circuit,
**caractérisé en ce que**
les dispositifs de coupure de courant (11 ; 15, 16, 17) sont agencés entre un dispositif de commutation de courant (4) et le réseau électrique correspondant (9, 10), et en particulier ses connexions d'alimentation (5, 6 ; 7, 8), lesdits réseaux électriques (9, 10) étant un réseau TN (9) et un réseau IT (10), dans lequel le réseau IT (10) est un système à batterie ou à accumulateur et le réseau TN (9) est le réseau électrique public.

2. Dispositif de circuit selon la revendication 1,
**caractérisé en ce que**
la prise de terre (2) du récepteur électrique (3, 19) est mise en oeuvre comme une liaison à la terre du boîtier de récepteur (12) pour éviter une tension de contact.

3. Dispositif de circuit selon la revendication 1 ou 2,
**caractérisé en ce que**
le dispositif de commutation de courant (4) comporte au moins un module de relais ou de protection (13, 14).

4. Dispositif de circuit selon l'une des revendications précédentes,
**caractérisé en ce que**
chaque dispositif de coupure de courant (11) comporte au moins une protection (15, 16, 17).

5. Dispositif de circuit selon l'une des revendications précédentes,
**caractérisé en ce que**
un dispositif de coupure de courant (11 ; 15, 16, 17) est chaque fois branché entre le dispositif de commutation de courant (4 ; 13, 14) et la connexion d'alimentation L (5) du réseau TN (9) et entre le dispositif de coupure de courant (11 ; 15, 16, 17) et la connexion d'alimentation positive (7) du réseau IT (10).

6. Dispositif de circuit selon l'une des revendications précédentes,
**caractérisé en ce que**
un autre dispositif de coupure de courant (11, 17) est branché entre le dispositif de commutation de courant (4 ; 13, 14) et la connexion d'alimentation négative (8) du réseau IT (10).

7. Dispositif de circuit selon l'une des revendications précédentes,
**caractérisé en ce que**
le dispositif de circuit (1) est constitué comme un module (18) qui peut être agencé entre une pluralité de récepteurs électriques (3) branchés en parallèle et les deux réseaux électriques (9, 10).

8. Dispositif de circuit selon l'une des revendications précédentes,
**caractérisé en ce que**
le récepteur électrique (3) est constitué comme une lampe (19), et en particulier un éclairage de secours, un signal lumineux d'évacuation ou un autre dispositif similaire.

9. Dispositif de circuit selon l'une des revendications précédentes,
**caractérisé en ce que**
le conducteur N et le conducteur de protection du réseau TN (9) sont tous deux réalisés comme des conducteurs PEN.
